# EUROPEAN PATENT SPECIFICATION

(11) **EP 1 969 575 B1**
(45) Date of publication and mention of the grant of the patent: **02.06.2010**
(21) Application number: 06828774.7
(22) Date of filing: 30.12.2006
(51) Int. Cl.: G08G 1/16, B60R 21/00, E01F 9/00

(54) **METHOD FOR THE PREVENTION OF ACCIDENTS CAUSED BY TURNING VEHICLES**
VERFAHREN ZUR VERHINDERUNG VON DURCH ABBIEGENDE FAHRZEUGE VERURSACHTEN UNFÄLLEN
PROCÉDÉ DE PRÉVENTION DES ACCIDENTS PROVOQUÉS PAR DES VÉHICULES CHANGEANT DE DIRECTION

(30) Priority: 03.01.2006 DK 200600009; 05.05.2006 DK 200600637
(43) Date of publication of application: 17.09.2008
(73) Proprietor: See-Mi.Com APS, 8800 Viborg (DK)
(72) Inventor: SØRENSEN, Carsten, Mulvad, DK-8800 Viborg (DK)
(74) Representative: Schmidt, Jens Joergen
(86) International application number: PCT/DK2006/000754
(87) International publication number: WO 2007/076869

(56) References cited:
- EP-A- 0 673 802
- EP-A- 1 528 526
- WO-A-01/97197
- DE-A- 10 012 195
- DE-A-102004 052 144

## Description

The present invention relates to a method for preventing the drivers of vehicles from overlooking light vehicles, when turning the vehicle, where the light vehicle comprises means for transmitting a communication signal to communication means, which communication means comprise information means to inform the driver of the presence of a light vehicle approaching the vehicle.

The present invention further relates to an apparatus, which establishes communication between vehicles and light vehicles, which apparatus communicates with the driver of vehicles and comprises at least one receiver, which receiver is connected to at least one indication lamp and at least one acoustic alarm, and where the light vehicle comprises a transmitter.

### Background of the Invention

JP 2000067392 aims to provide the driver of a vehicle with a warning of light vehicles approaching from behind the vehicle. The invention warns the driver of a vehicle of an approaching mobile object and contributes to traffic safety in connection with right and left turns or the like. The mobile object information of a bike is transmitted by very weak radio waves from the transmitter 10 of the mobile object (bike, for instance) to the vehicle (truck, for instance), and in the truck the mobile object information is received from the bike by a receiver 20, and the driver is warned that a bike is approaching by a warning device 30. By the warning device 30 and a display saying attention to bike approaching', a voice warns the driver of bikes approaching from behind.

The Japanese document is disadvantageous, as bikes need to carry a transmitter, which operates continuously, thus requiring some kind of power supply. It is easy to provide a motorbike with a transmitter, as the electric power is available; however, on pedal bikes the batteries need to be placed in conjunction with the transmitter. The transmitter as such does not provide the driver of the bike with any information on operation or non-operation, as no indication means are mounted on the transmitter. The indication means may be a light emitting diode, LED, however, even LEDs require limited power supply, this reduces the lifetime of the batteries. As a consequence of the Japanese invention many bikes will probably end up being equipped with transmitters, however, only a few of the transmitters will be operating. Thus, the invention does not provide the driver of a vehicle with a sufficient warning of approaching bikes.

Another disadvantage connected with the Japanese document is that the receiver is placed on the back of the vehicle. This location is not optimum as some accidents occur, where bikes stop at red light and vehicles approach. In this case the driver of the vehicle receives no warning of the bike while doing a turn.

EP 1 531 444 A2 concerns an apparatus for detecting moving and unmoving objects, which objects carry means for marking, where the marking is detected by means of detection means placed in a vehicle, and where the marking means comprise radio transmitting means, and where the detection means comprise radio receiving means. The vehicle comprises computerised means for analysing the received signals. The result of the analysis is used to activate accident prevention means. The accident prevention means are e.g. flashing light(s), horn, and automatic brake activation or moving of the engine hood into upright position.

This document concerns detection of objects such as persons or bikes in front of the vehicle, but detection of bikes next to the vehicle during turning is not described.

EP 1 528 526 relates to a system for detecting mobile units by communication between a car and mobile unit. The car includes a device which detects if a turn signal is activated in the car, and transmits a detection signal if the turn signal is activated. The mobile unit detects the detection signal from the car and responds with a respond signal to the car, so that the device in the car can alarm the driver of the car if a mobile unit is present.

WO 01/97197 relates to a hazard lighting apparatus for motorways. The apparatus is placed at the hard shoulder of the motorway and comprises lighting means and a infrared sensor for sensing if a car at the hard shoulder of the motorway is moving at less than the predetermined speed or is stopped within the detection range of the sensor. If such a car is detected, the sensor activates the lighting means. Hereby, oncoming vehicles can be warned of hazards ahead.

Other technical solutions are widely used to prevent accidents while turning vehicles. For instance vehicles are provided with special mirrors however it seems that these mirrors do not provide sufficient traffic safety. Furthermore, vehicle cameras help the driver to spot bikes. These vehicle cameras may be provided with wide angle objectives in which case a cyclist appears extremely small on the TV screen. The vehicle camera is disadvantageous as the driver of a vehicle is preoccupied with driving and does not have time to look at a vehicle TV screen when driving.

### Object of the Invention

It is the object of the invention to prevent the drivers of vehicles and lorries from overlooking pedal bikes and other light vehicles, when turning the vehicle.

### Description of the Invention

The object can be achieved with the method described in the opening paragraph, if this method is slightly modified.

The invention therefore relates to a Method for preventing the drivers of vehicles from overlooking two-wheel light vehicles, when turning the vehicle, where the light vehicles comprises means for transmitting a communication signal towards communication means comprising optical and/or acoustic means for informing the driver of the presence of a light vehicle near the vehicle, which communication means activates the optical and/or acoustic means in response to receiving said communication signal, characterized in that the communication means are placed at the kerbside of the road.

By means of the above method it is achieved that the driver of a vehicle is informed of the presence of a light vehicle, even if the driver of the vehicle does not see the light vehicle approaching. The optical or acoustic signal automatically makes the driver aware of light vehicles, which prevents accidents from happening. The signal transmitted from the light vehicle could be a radio signal; however, all kinds of modulated signals apply. E.g. infra-red light generated from light emitting diodes, which diodes can be modulated with one or another code form. Acoustic transducers may also be used, e.g. ultra sound not heard by human beings. The communication means can be formed such that different kinds of input signals are accepted. It is possible for some bikes to comprise reflecting means, while others comprise radio transmitters and while even others comprise acoustic signal generators, however, the communication means can comprise receivers for every kind of signal.

Hence it is achieved that the method functions with all vehicles independent of the equipment mounted in the vehicle. A post can be placed in crossings, where many accidents happen. The post overrules even if other communication means are mounted in the vehicle.

This makes the communication much more reliable. The modulation of signals assures that warning signals are sent only when there is a reason for it.

By placing the apparatus in a post at the kerbside all vehicles and small cars are informed of vehicles turning.

Solar cells can, furthermore, apply as energy supply to a post. However other energy source means are necessary as the post is to work at night and during poor weather conditions too. The energy source means could be any kind of batteries or fuel cells. Sometime in the future also capacity storage means could be a possibility.

According to a preferred embodiment the vehicle comprises means for transmitting a radio signal to the light vehicle, where the light vehicle comprises means for receiving the radio signal, and where the means on the light vehicle convert the received radio signals into electric power, which power is used for the means to transmit a radio signal to at least one receiver, which receiver is placed on the vehicle.

This ensures that a very reliable radio-transmitting device can be used on the light vehicle. As the circuit on the light vehicle operates without any kind of power supply, it is independent of batteries that may run down. The power transmitted from the light vehicle is limited to have a maximum transmission distance of approximately 10 metres. This is advantageous in that only light vehicles near the vehicle will respond. Light vehicles located further away from the vehicle do not respond simply because their signals are too weak. The signal, which the vehicle receives, is used in an internal electronic circuit to indicate that a light vehicle is approaching the vehicle. The driver is warned of light vehicles by means of light emitting diodes, which flash in front of him and also by means of an acoustic signal. Thus, the driver will recognize light vehicles approaching his vehicle, and he will know when it is safe to make a turn. When the driver receives a signal from an object located on the side of the vehicle, he needs to check his side-view mirrors to locate the object. If he cannot see the object he will have to wait until the object has passed on his right side. The driver might only receive one signal per object, as each RFID tag carries a unique number. In case of several bicycles every signal may be received and several diodes can be placed on the vehicle control panel.

According to the invention the communication means are placed at the kerbside, e.g in a post, where the communication means comprise optical and/or acoustic means to inform the driver of a vehicle of a light vehicle approaching.

The communication means can be placed in the vehicle, where the communication means comprise optical and/or acoustic means to inform the driver of the vehicle of a light vehicle approaching.

The vehicle preferably comprises means for transmitting and receiving radio signals in the passenger side, which means are placed alongside and in front of the vehicle. Thus, the driver is warned of light vehicles driving alongside the vehicle, which otherwise he would be unable to see. The transmitting and receiving devices and their radio antennas may be placed on the side of the vehicle at intervals of only a few metres so as to obtain a very precise indication of light vehicles along the entire passenger side of the vehicle.

The invention can be modified such that the vehicle comprises a number of combined transmitters and receivers, where the combined transmitters and receivers are time multiplexed to achieve indication of the location of a light vehicle at a given period of time. Within the range of the transmitters and receivers even the slightest movement of a light vehicle is visible to the driver. Signals can be transmitted from single transmitters placed on a row, where the entire row of transmitters and receivers are activated almost simultaneously. In connection with multiplexing it is particularly preferred that the amplitude of the received signals is measured in the system. This ensures a very precise indication of the position of a light vehicle, however, the amplitude of the receiving signals differs, and by measuring the amplitude it is possible to indicate which transmitter is closest to the responding receiver and transmitter placed on the light vehicle.

Thus, a vehicle 4 can comprise indication means to indicate the actual position of a light vehicle.

The apparatus described in the second paragraph can be modified, if the light vehicle comprises a transmitter for transmitting electromagnetic or acoustic modulated radiation to the apparatus, where the apparatus comprises a receiver for receiving and demodulating the electromagnetic or acoustic modulated radiation, which apparatus informs the driver by means of optical and acoustic signals.

The apparatus can be placed in a post at the kerbside, which apparatus informs the driver by means of flashing light and by means of acoustic signals.

The vehicle comprises at least one radio transmitter and at least one radio receiver, which light vehicle comprises at least one receiver, which receiver generates electric power based on the received signals, which power is supplying a transmitter, which transmitter transmits a signal, which signal comprises a coded identification, which coded identification is received by at least one receiver placed in conjunction with the vehicle. Thus, an extremely efficient system is achieved as only signals comprising the correct code are accepted and all other radio signals transmitted from all kinds of radio transmitters i.e. mobile phones are suppressed automatically, as the signals are not coded correctly. Hence the system is very efficient in that it warns of light vehicles at the passenger side of a vehicle.

Preferably, the receiver and the transmitter can be combined into one circuit, which circuit is a RFID tag. The use of RFID tags may result in a very efficient and very cheap receiver and transmitter. The RFID tags have a range of approximately 10 metres for receiving and transmitting signals. This system is quite adequate to detect light vehicles regardless of the situation.

It is possible that the RFID tag is placed in conjunction with light reflective means, which light reflective means are fixed to the light vehicle. This achieves that an existing component placed on all bicycles can be easily modified allowing for a new function of radio reception and transmission. The light reflecting means is a very cheap component and combining this component with the RFID tag will not increase the price of the component significantly.

The post at the kerbside can be powered by a solar panel placed in conjunction with the post, where the post can comprise energy storage means.

This invention also concerns an apparatus for communication between light vehicles and other vehicles, which apparatus informs the driver of a vehicle of a present or approaching light vehicle, which apparatus comprises at least one detector, which detector is connected to at least one indicating lamp and at least one acoustic alarm, where the apparatus is placed in a post placed at the kerbside, which apparatus comprises at least one detector for detecting light vehicles, where the post comprises information means placed over ground level to warn the driver of a vehicle of a light vehicle or person approaching.

### Description of the drawings

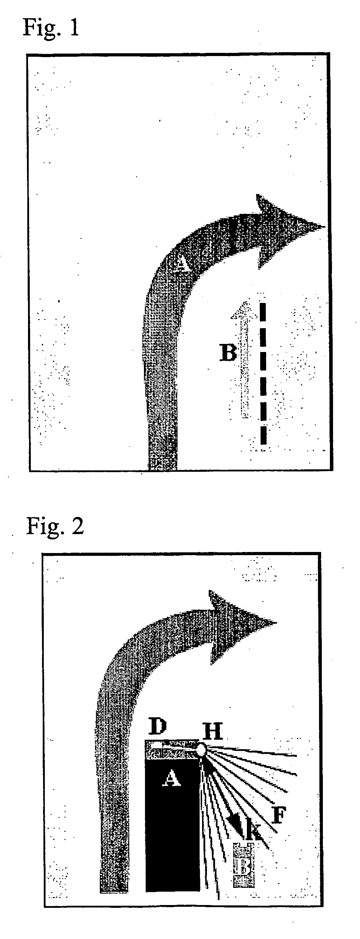

Fig. 1 shows the track of a vehicle turning right. The big arrow (A) indicates a four-wheel vehicle (bus, car, tractor) turning right in a crossing. The small arrow (B) indicates a two-wheel light vehicle (bike or scooter) driving straight ahead. If the driver of the four-wheel object (A) does not see the two-wheel object (B) an accident occurs, which accident often results in serious injuries or even death.

To reduce the number of accidents, the present invention provides the following solution:
Fig. 2 shows vehicle (A) approaching a crossing. As the right flashing light is activated, the transmitter starts sending signals (F). When a signal hits a RFID tag (K) on a bike/scooter (B), the tag (K) returns the signal to the antenna (H). When the antenna (H) receives a signal, it passes it on to a box (D) in front of the driver of the vehicle (A). A sound warns the driver of moving objects on the right side, which sound causes him to wait even though he cannot see any light vehicles in his side-view mirrors. If more than one tag is reflected, the box (D) makes beep noises.

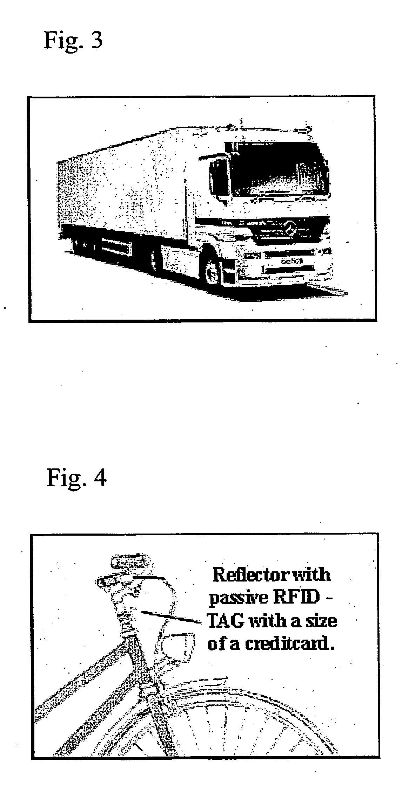

Fig. 3 shows a vehicle equipped with a box having the size of a mobile phone on the right side. An antenna on the box can both send and receive signals. The antenna is linked to a box in front of the driver. The position on the right side is not yet chosen. Long vehicles can be equipped with more than one antenna to improve traffic safety.
Fig. 4 shows a bike equipped with a reflector with a build-in passive RAID tag. The size of the reflector is for the time being that of a credit card. The RFID tag has a unique number and does not carry any other information. The tag does not use any kind of battery power.

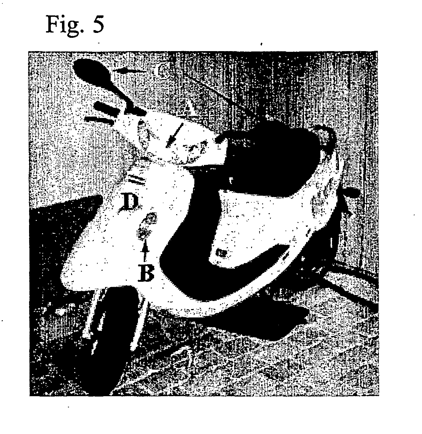

Fig. 5 shows a scooter being equipped with a passive RFID tag in either the headlight glass (A), right/left turn flashlight glass (B), on the back of the side-view mirror (C) or in the front coat (D).

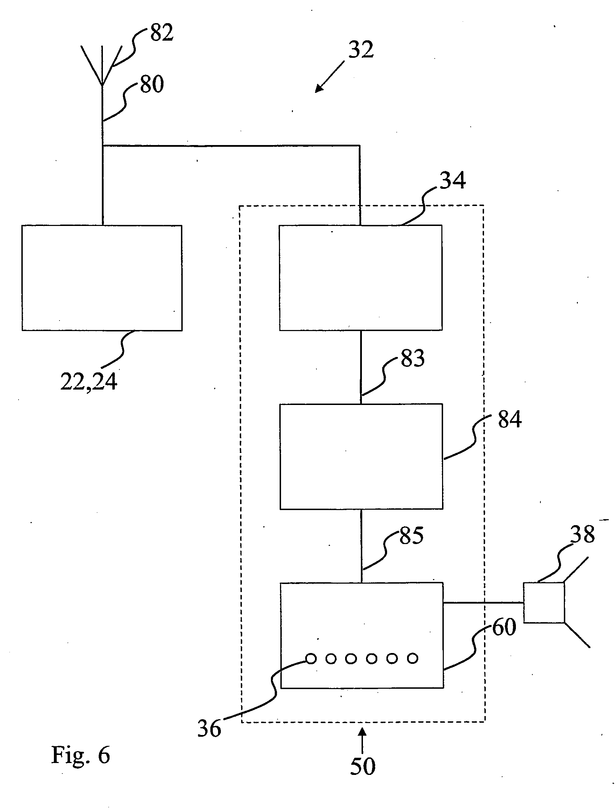

Fig. 6 shows a principal diagram of an apparatus 32 operating in conjunction with a vehicle. The apparatus 32 comprises a radio transmitter 22, 24, which transmitter 22, 24 is connected to an antenna 82 over line 80. The apparatus 32 further comprises a receiver 34, which is connected to the antenna 82 over line 80. From the receiver 34 a line 83 connects to electronic control means 84, which is connected to indicating means 60 over line 85, which indicating means comprises indicating lamps 36 and acoustic means 38.

During operation the transmitter 22, 24 transmit signals at very short time intervals over line 80 to the antenna 82. When not transmitting, the receiver 34 receives signals over line 80 at time intervals, which signals are received by the antenna 82. The receiver 34 has a signal amplifier and a frequency filter to prevent all signals of different frequencies from passing through the filter. The filtered signals are demodulated and low frequency signals can be transmitted further into the electronic control unit 84 over line 83. The electronic control unit can in some situations comprise decoding means to suppress all signals, which do not comprise the correct code. If a signal is accepted, a communication signal is transmitted over line 85 to the indicating means 60. Indicating lights indicate that a signal has been received and an acoustic alarm is transmitted over the acoustic transmitter 38.

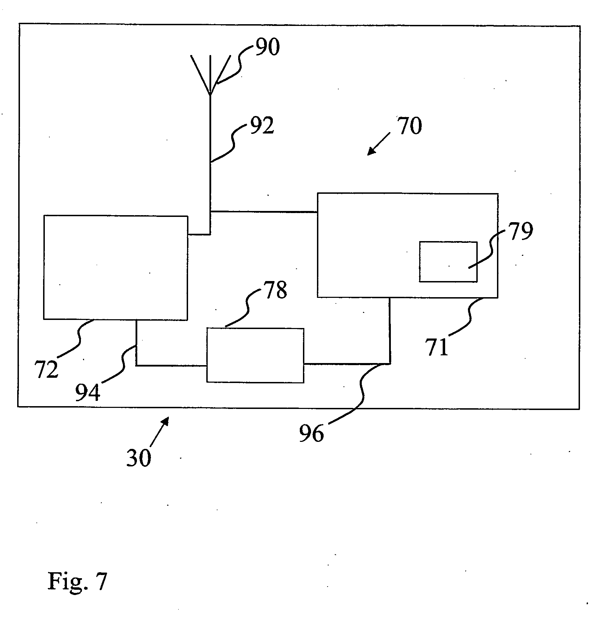

Fig. 7 shows a combined radio receiver and transmitter 30. An antenna 90 is connected to a receiver 72 over line 92. The receiver 72 generates electric power, which power is transmitted over line 94 towards power storage 78 from where the power is transmitted towards the transmitter 71 over line 96. The transmitter 71 comprises coded information. Furthermore, the transmitter 71 is connected to the antenna 90 over line 92.

During operation of the circuit shown in fig. 7, the receiver delivers after a very short period of time sufficient power to the power storage 78 over line 94 to provide power to the transmitter 71. The transmitter 71 then reads the coded information 79 and a signal containing the coded information is transmitted over line 92 to antenna 90.

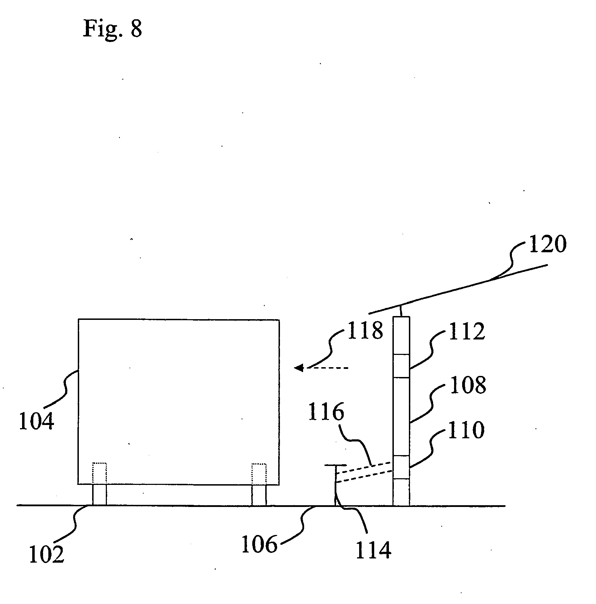

Figure 8 shows a vehicle 104 driving on a road 102. Next to the cycle track 106 a post 108 is placed. The post 108 comprises receiving or detection means 110 and transmission means 112 and the light vehicle 114 communicates by means of signals 116 with the receiving or detection means 110. At the same time the transmission means 112 transmit a signal 118 to the vehicle 104. At the top of the post 108 a solar panel 120 is placed, which solar panel supplies the post 108 with electrical energy. The post also comprises energy storing means, however, these are not shown.

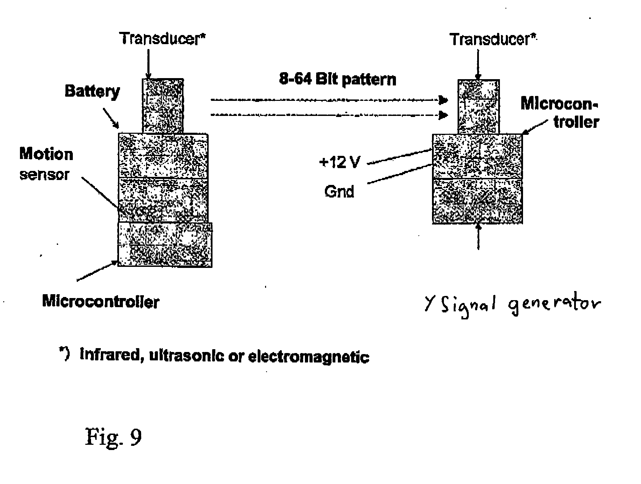

During operation the post 108 receives signals from the light vehicle 114. The signals 116 transmitted can be optical information coming e.g. from light emitting diodes placed on a bicycle or they could be radio signals generated from the bicycle, e.g. by RFID-tags reflecting means on the bicycle. Alternatively the receiver or detector 110 may transmit light; infra-red or ultra violet light to the light vehicle 114, which comprises reflective means reflecting light of a correct frequency only. According to another possible embodiment the light vehicle 114 comprises acoustic transducers transmitting ultra sound of a frequency, which human beings cannot perceive. Figure 9 shows electronic components to be placed on e.g. a bike. A movement sensor indicates whether or not the bike is moving, and a signal from the movement sensor is transmitted to a signal generator transmitting the signals to e.g. a post 108 or directly to a vehicle.

According to a preferred embodiment the post 108 or other kind of equipment can be placed near a crossing to communicate with e.g. RFID-tags placed on bikes or persons by means of coils placed below the surface of road tracks or bike tracks. These coils operate to magnetically detect vehicles. The coils can also be used to transmit a signal to a RFID circuit placed near the coil. The coil can also receive the signal transmitted from the RFID circuit. These coils probably already exist to detect vehicles and they are used to change the traffic light, when a vehicle approaches. By using coils below the surface of road tracks or bike tracks the communication distance is limited because transmission only takes place between the coil and the RFID-tag, which might be placed on the bike. By using coils in the road track the usual communication distance is reduced to less than approximately one metre. By using coils below the surface of the road track or the bike tracks it is possible for receiving and computerised means to detect the number of approaching bikes at a distance defined by the placement of the coils. Detection of the velocity of approaching bikes is probably also possible. This way the warning sign on a post 108 or the warning signal transmitted to the heavy vehicle inform the driver not only of the number of bikes approaching but also of bikes approaching fast behind a number of other bikes.

The coils can be used to detect bikes without RFID tags, but only bikes containing a magnetic material which can be detected by coils. Bikes can be produced of materials which do not communicate with the coils, and therefore the RFID tag efficiently indicates bikes of plastic or aluminium.

Although the present invention has been fully described in connection with preferred embodiments, it is evident that modifications may be introduced within the scope thereof, not considering this as limited by these embodiments, but by the contents of the following claims.

## Claims

1. Method for preventing the drivers of vehicles (A) from overlooking two-wheel light vehicles (B, 114), when turning the vehicle (A, 104), where the light vehicles (B, 114) comprises means for transmitting a communication signal towards communication means comprising optical (36) and/or acoustic (38) means for informing the driver of the presence of a light vehicle (B, 114) near the vehicle (A, 104), which communication means activates the optical (36) and/or acoustic (38) means in response to receiving said communication signal,
**characterized in that**
the communication means are placed at the kerbside of the road.

2. Method according to claim 1, **characterized in that** the communication means comprise transmission means (22) to transmit a radio signal to the light vehicle (B, 114), where the light vehicle (B, 114) comprises means (72) for receiving the radio signal, where the means (72) on the light vehicle (B, 114) convert the received radio signal into electrical power, which power is used for means (71) to transmit a radio signal to at least one receiver (34) which receiver (34) is placed in the communication means.

3. Method according to claim 1 or 2, **characterized in that** the communication means are placed in a post.

4. Method according to claim 1 or 2, **characterized in that** further communication means are placed in the vehicle, where the further communication means comprise optical and/or acoustic means to inform the driver of the vehicle of a light vehicle approaching.

5. Method according to claim 4, **characterized in that** the vehicle (A) comprises further means for transmitting and receiving radio signals at the passenger side, which means are placed alongside and in front of the vehicle (A).

6. Method according to claim 5, **characterized in that** the vehicle (A) comprises a number of combined transmitters (22) and receivers (34), where the transmitters (22) and receivers (34) are time multiplexed for achieving an indication of the actual placement of a light vehicle (B).

7. Method according to claim 6, **characterized in that** the vehicle (A, 104) comprises indication means (36, 38) for indicating the actual position of a light vehicle (B, 114) in relation to the vehicle (A, 104).

## Patentansprüche

1. Verfahren zum Verhindern, dass Fahrer von Fahrzeugen (A) zweirädrige leichte Fahrzeuge (B, 114) übersehen, wenn sie mit dem Fahrzeug (A, 104) die Fahrtrichtung ändern, wobei die leichten Fahrzeuge (B, 114) Mittel umfassen, um ein Kommunikationssignal zu Kommunikationsmitteln zu übertragen, die optische (36) und/oder akustische (38) Mittel umfassen, um den Fahrer darüber zu informieren, dass sich ein leichtes Fahrzeug (B, 114) nah dem Fahrzeug (A, 104) aufhält, wobei die Kommunikationsmittel in Reaktion auf den Empfang des Kommunikationssignals die optischen (36) und/oder akustischen (38) Mittel aktivieren,
**dadurch gekennzeichnet, dass**
die Kommunikationsmittel am Straßenrad platziert sind.

2. Verfahren nach Anspruch 1, **dadurch gekennzeichnet, dass** die Kommunikationsmittel Übertragungsmittel (22) umfassen, um ein Funksignal zum leichten Fahrzeug (B, 114) zu übertragen, wobei das leichte Fahrzeug (B, 114) Mittel (72) zum Empfangen des Funksignals umfasst, wobei die Mittel (72) am leichten Fahrzeug (B, 114) das empfangene Funksignal in elektrische Energie wandeln, wobei diese Energie für Mittel (71) verwendet wird, um ein Funksignal zu wenigstens einem Empfänger (34) zu übertragen, wobei der Empfänger (34) in den Kommunikationsmitteln angeordnet ist.

3. Verfahren nach Anspruch 1 oder 2, **dadurch gekennzeichnet, dass** die Kommunikationsmittel in einer Säule angeordnet sind.

4. Verfahren nach Anspruch 1 oder 2, **dadurch gekennzeichnet, dass** weitere Kommunikationsmittel im Fahrzeug angeordnet sind, wobei die weiteren Kommunikationsmitteln optische und/oder akustische Mittel umfassen, um den Fahrer des Fahrzeugs darüber zu informieren, dass sich ein leichtes Fahrzeug nähert.

5. Verfahren nach Anspruch 4, **dadurch gekennzeichnet, dass** das Fahrzeug (A) weitere Mittel zum Übertragen und Empfangen von Funksignalen auf der Beifahrerseite umfasst, wobei die Mittel entlang des Fahrzeugs (A) und vorne am Fahrzeug (A) angeordnet sind.

6. Verfahren nach Anspruch 5, **dadurch gekennzeichnet, dass** das Fahrzeug (A) eine Anzahl kombinierter Sender (22) und Empfänger (34) umfasst, wobei die Sender (22) und Empfänger (34) zeitlich gemultiplext sind, um eine Anzeige für die tatsächliche Lage eines leichten Fahrzeugs (B) zu erzielen.

7. Verfahren nach Anspruch 6, **dadurch gekennzeichnet, dass** das Fahrzeug (A, 104) Anzeigemittel (36, 38) umfasst, um die tatsächliche Position eines leichten Fahrzeugs (B, 114) relativ zum Fahrzeug (A, 104) anzuzeigen.

## Revendications

1. Procédé pour empêcher que la présence de véhicules légers à deux roues (B, 114) n'échappe aux conducteurs de véhicules (A), lors d'un changement de direction du véhicule (A, 104), dans lequel les véhicules légers (B, 114) comprennent un moyen pour transmettre un signal de communication vers un moyen de communication comprenant un moyen optique (36) et/ou un moyen acoustique (38) pour informer le conducteur de la présence d'un véhicule léger (B, 114) à proximité du véhicule (A, 104), lequel moyen de communication active le moyen optique (36) et/ou le moyen acoustique (38) en réponse à la réception dudit signal de communication,
**caractérisé en ce que**
le moyen de communication est placé en bordure de route.

2. Procédé selon la revendication 1, **caractérisé en ce que** le moyen de communication comprend un moyen de transmission (22) pour transmettre un signal radio au véhicule léger (B, 114), dans lequel le véhicule léger (B, 114) comprend un moyen (72) pour recevoir le signal radio, dans lequel le moyen (72) sur le véhicule léger (B, 114) convertit le signal radio reçu en énergie électrique, laquelle énergie est utilisée comme moyen (71) pour transmettre un signal radio à au moins un récepteur (34), lequel récepteur (34) est placé dans le moyen de communication.

3. Procédé selon la revendication 1 ou 2, **caractérisé en ce que** le moyen de communication est placé sur un poteau.

4. Procédé selon la revendication 1 ou 2, **caractérisé en ce qu'**un autre moyen de communication est placé dans le véhicule, dans lequel l'autre moyen de communication comprend un moyen optique et/ou un moyen acoustique pour informer le conducteur du véhicule de l'approche d'un véhicule léger.

5. Procédé selon la revendication 4, **caractérisé en ce que** le véhicule (A) comprend un autre moyen pour transmettre et recevoir des signaux radio du côté passager, lequel moyen est placé sur le côté à l'avant du véhicule (A).

6. Procédé selon la revendication 5, **caractérisé en ce que** le véhicule (A) comprend un certain nombre d'émetteurs (22) et de récepteurs (34) en combinaison, dans lequel les émetteurs (22) et les récepteurs (34) sont multiplexés dans le temps pour obtenir une indication de l'emplacement réel d'un véhicule léger (B).

7. Procédé selon la revendication 6, **caractérisé en ce que** le véhicule (A, 104) comprend un moyen d'indication (36, 38) pour indiquer la position réelle d'un véhicule léger (B, 114) par rapport au véhicule (A, 104).
